# EUROPÄISCHE PATENTSCHRIFT

(11) **EP 1 595 302 B1**
(45) Veröffentlichungstag und Bekanntmachung des Hinweises auf die Patenterteilung: **31.03.2010**
(21) Anmeldenummer: 04701893.2
(22) Anmeldetag: 14.01.2004
(51) Int. Cl.: H01M 8/02, C23C 30/00

(54) **HERSTELLUNGSVERFAHREN FÜR EINE SCHUTZSCHICHT FÜR HOCHTEMPERATURBELASTETE, CHROMOXIDBILDENDE SUBSTRATE**
METHOD FOR PRODUCING A PROTECTIVE COATING FOR SUBSTRATES THAT ARE SUBJECTED TO HIGH TEMPERATURES AND FORM CHROMIUM OXIDE
PROCEDE DE REALISATION D'UNE COUCHE PROTECTRICE POUR SUBSTRATS SOUMIS A DES TEMPERATURES ELEVEES FORMANT DE L'OXYDE DE CHROME

(30) Priorität: 18.02.2003 DE 10306647
(43) Veröffentlichungstag der Anmeldung: 16.11.2005
(73) Patentinhaber: Forschungszentrum Jülich GmbH, 52425 Jülich (DE)
(72) Erfinder: TIETZ, Frank, 52428 Jülich (DE); ZAHID, Mosine, 65385 Rüdesheim am Rhein (DE)
(86) Internationale Anmeldenummer: PCT/DE2004/000033
(87) Internationale Veröffentlichungsnummer: WO 2004/075325

(56) Entgegenhaltungen:
- EP-A- 0 908 529
- DE-A- 4 422 624
- DE-A- 10 050 010
- DE-C- 19 627 504
- US-A- 5 942 349

## Beschreibung

Die Erfindung betrifft eine Schutzschicht für hochtemperaturbelastete Substrate, insbesondere für Interkonnektoren für Hochtemperatur-Brennstoffzellen, sowie ein Verfahren zu dessen Herstellung

### Stand der Technik

Eine Hochtemperatur-Brennstoffzelle (Solid Oxide Fuel Cell - SOFC) ermöglicht eine direkte Umwandlung von chemischer in elektrische Energie. Der Brennstoff (H₂, CH₄, CO etc.) wird von einem Oxidationsmittel (O₂, Luft) durch einen sauerstoffleitenden Feststoffelektrolyten (typischerweise Y-stabilisiertes ZrO₂) getrennt. Bei einer Betriebstemperatur der Zelle von etwa 600 bis 1000 °C werden Sauerstoffionen von der Kathodenseite durch den Festelektrolyten zur Anode geleitet, wo sie mit dem Brennstoff reagieren. Der Elektrolyt ist mit porösen, katalytisch wirkenden Elektrodenmaterialien beschichtet. Im allgemeinen besteht die Anode (Brennstoffseite) aus einem Ni/ZrO₂-Cermet, die Kathode (Sauerstoffseite) aus einem Perowskit auf LaMnO₃-Basis.

Um die SOFC-Technik für die Stromerzeugung nutzen zu können, müssen mehrere Zellen zusammengeschaltet werden. Daher ist noch eine weitere Zellkomponente nötig, nämlich die bipolare Platte, die auch Interkonnektor genannt wird. Im Gegensatz zum Elektrolyten und den Elektroden, die größenordnungsmäßig 100 µm dick sind, ist die bipolare Platte bei den meisten heute diskutierten SOFC-Flachzellen-Konzepten von einem halben bis einige Millimeter dick und bildet dabei nicht nur das gaszuleitende Verbindungsglied zwischen den Einzelzellen, sondern auch die tragende Komponente der Zelle. Interkonnektoren für Hochtemperatur-Brennstoffzellen sowie ein Herstellungsverfahren sind aus der Literatur bekannt.

Eine wesentliche Eigenschaft, die eine Interkonnektorlegierung aufweisen muss, ist eine hohe Oxidationsbeständigkeit in dem Anoden- und Kathodengas bei Betriebstemperatur. Außerdem muss sie, wegen der thermophysikalischen Kompatibilität mit den keramischen Zellkomponenten, einen für Metalle relativ niedrigen Ausdehnungskoeffizienten (ca. 10 bis 13 * 10⁻⁶ K⁻¹) aufweisen. Der exakte Ausdehnungskoeffizient hängt vom jeweiligen Zellenkonzept ab, d. h. bei Brennstoffzellen mit einem Anodensubstrat als mechanisch tragende Komponente sind im allgemeinen etwas höhere Ausdehnungskoeffizienten erforderlich als bei Zellenkonzepten, die eine Elektrolytfolie als tragende Komponente besitzen.

Die gewünschte Eigenschaftskombination für Interkonnektorwerkstoffe können im Prinzip von chromoxidbildenden Hochtemperaturwerkstoffen erfüllt werden. Diese Werkstoffgruppe bildet bei den typischen SOFC-Betriebstemperaturen eine oxidische Deckschicht auf Chromoxidbasis aus, die den Werkstoff vor schneller Schädigung durch Oxidation schützt. Die meisten chromoxidbildenden Werkstoffe (auf der Basis NiCr, NiFeCr oder CoCr) sind jedoch für die Anwendung in Hochtemperatur-Brennstoffzellen nicht geeignet, da sie wesentlich höhere thermische Ausdehnungskoeffizienten aufweisen als die üblichen keramischen Komponenten der Zelle. Daher werden insbesondere für Flachzellenkonzepte der Hochtemperatur-Brennstoffzelle vorwiegend zwei Gruppen von chromoxidbildenden Werkstoffen als Interkonnektormaterial in Betracht gezogen: Chrombasislegierungen oder chromreiche Legierungen auf Eisenbasis (ferritische Stähle).

Bei hohen Temperaturen (ca. 300 - 1200 °C) reagiert die Chromoxidschicht mit Sauerstoff und H₂O zu Chromtrioxid (CrO₃) und Chromoxidhydroxiden (CrC₂(OH)₂, CrO(OH)₄), die wegen ihres hohen Dampfdruckes bei diesen Temperaturen durch den Gasraum zur Kathode bzw. zur Grenzfläche zwischen Elektrolyt und Kathode transportiert werden können. Dort reagieren diese Cr(VI)-Verbindungen mit dem Kathodenmaterial und führen zu einer katalytischen Behinderung der Sauerstoffreduktion während des Brennstoffzellenbetriebs. Dieser Prozess trägt maßgeblich zur Verringerung von Leistungs- und Lebensdauer der Brennstoffzelle bei.

Zur Verhinderung der Chromverdampfung wurden bisher verschiedene Verfahren vorgeschlagen oder angewendet. Beispielsweise wird ein Verfahren beschrieben, bei dem die Oberfläche der Interkonnektoren mit aluminiumreichen Schichten belegt wird. Allerdings müssen hier die Kontaktflächen zwischen Elektroden und Interkonnektor aluminiumfrei bleiben, da sich sonst ein zu hoher Widerstand einstellen würde. Die Auswirkungen der Chromverdampfung treten somit verzögert auf, sind aber nicht behoben.

Als Verbesserung des Verfahrens wird die zusätzliche Beschichtung der Kontaktflächen mit Nickel, Kobalt oder Eisen vorgenommen, damit sich bei Betriebsbedingungen eine (Cr, Ni) -, (Cr,Co)- oder (Cr, Fe) -Spinellschicht ausbilden kann, die die Chromverdampfung zusätzlich herabsetzt.

In US-A-5,942,239 wird ein Interkonnektor aus einer chromoxidbildenden Legierung offenbart, die eine Beschichtung aufweist. Diese Beschichtung umfasst eine oxidische Oberflächenschicht mit wenigstens einem Metall aus der Gruppe (Mn, Fe, Co und Ni) sowie eine Metall-Chrom-Spinell-Zwischenschicht, die zwischen der oxidischen Oberflächenschicht und dem Substrat angeordnet ist. Die chromhaltige Spinell-Zwischenschicht bildet sich dabei aus der Reaktion des Chroms aus der Chromoxidschicht auf dem Substrat mit wenigstens einem Metalloxid aus der oxidischen Oberflächenschicht.

Eine weitere Variante stellt die Beschichtung von Interkonnektoren mit lanthanhaltigen Schichten dar (LaC-rO₃, La₂O₃, LaB₆) . Entweder wird die LaCrO₃-Schicht direkt aufgetragen oder das sich bildende Chromoxid reagiert mit den reaktiven lanthanhaltigen Schichten während des Betriebes zu LaCrO₃. In der Literatur ist jedoch bereits erwähnt, dass Mikrorisse in der LaCrO₃-Schicht nicht ausheilen und somit keinen ausreichenden Schutz gegen die Chromverdampfung gewährleisten.

Ein ganz ähnlicher Ansatz zur Erzeugung von Schutzschichten ist entweder die Verwendung von Stählen, die Elemente wie beispielsweise Mangan, Nickel oder Kobalt enthalten, die unter oxidierenden Bedingungen zusammen mit Chrom Spinellschichten bilden, oder die Auftragung von manganhaltigen Schichten, die unter Reaktion mit Chromoxid ebenfalls zu Spinellschichten führen. Die Bildung dieser Chrom-Spinell-Strukturen führt nachweisbar zu einer Reduzierung der Chromverdampfung (Ch. Gindorf, L. Singheiser, K. Hilpert, Steel Research 72 (2001) 528 - 533). Diese ist aber immer noch nicht niedrig genug, um eine ausreichend hohe Leistung und lange Lebensdauer der Brennstoffzelle zu gewährleisten, da es immer noch zur Chrom-Diffusion durch die chromhaltige Spinellschicht kommt. Außerdem weist die Spinellphase wegen ihres hohen Cr-Ahteils selbst einen Cr(VI)-Oxid- bzw. -hydroxiddampfdruck auf. Somit können weiterhin Chrom(VI)oxid- und Chromoxidhydroxid-Verbindungen freigesetzt werden.

Aus DE 100 50 010 A ist ein weiteres Verfahren zur Herstellung einer Schutzschicht für chromhaltige Interkonnektoren bekannt, bei dem mnO₂ oder CoO durch Streichen oder Siebdruck auf den Interkonnektor aufgebracht werden, und während des Fügeprozesses bei 800 bis 950 °C zu einer gasdichten, chromfreien Schutzschicht gesintert werden, die eine Kontamination der Kathode durch Chrom aus dem Legierungsstahl des Interkonnektors verhindert. Die Schutzschicht kann darüber hinaus auch noch Fe oder Ni enthalten.

Als Beschichtungsmethoden werden üblicherweise folgende Verfahren vorgeschlagen:
- Ionenimplantation: Einbau von Elementen wie z. B. Mn, Co, Ni, usw. in eine Substratoberfläche mittels eines Ionenstrahlverfahrens.
- Physical Vapour Deposition (PVD): direkte Abscheidung der Schutzschichten mittels physikalischer Prozesse auf das Substrat
- Chemical Vapour Deposition (CVD): Auftragung der Schutz schichten mittels chemischer Reaktionen auf der Substrat-oberfläche
- Plasmaspritzen: Auftragung der Schutzschichten durch in einer Plasmafackel aufgeschmolzene Schutzschichtpartikel.

Diese Verfahren können gute Schutzschichten erzeugen, sind jedoch im Allgemeinen kostenintensiv und führen zu einer unnötigen Verteuerung der Brennstoffzellenproduktion.

Der Interkonnektorwerkstoff ist üblicherweise ein chromoxidbildender, metallischer Werkstoff. Für Betriebstemperaturen einer SOFC-Brennstoffzelle (600 - 1000°C) ist Chrom in signifikanten Anteilen in diesem Werkstoff enthalten. Abhängig von dem Werkstofftyp variiert die Chromkonzentration. In Legierungen auf Chrombasis kann der Chromgehalt beispielsweise zwischen 60 und fast 100 Gew.-% variieren. Der Chromgehalt beträgt in den üblicherweise verwendeten Hochtemperatur-Konstruktionswerkstoffen auf Fe-, Ni- oder FeNi-Basis 13 bis 30 Gew.-%. Im Vergleich zu den keramischen SOFC-Materialien zeigen Werkstoffe auf Basis von NiCr und FeNiCr zu hohe thermische Ausdehnungskoeffizienten. Aus diesem Grund wurden bisher nur Legierungen auf Cr-Basis sowie FeCr-Basis in Betracht gezogen.

Der Werkstoff auf Cr- oder FeCr-Basis enthält oft weitere metallische Legierungselemente wie beispielsweise Mangan, Magnesium, Vanadium, etc. Die Konzentrationen dieser Elemente betragen üblicherweise 0,1 - 5 Gew.-%. Ein Bereich von 0,3 bis 1 Gew.-% wird dabei bevorzugt. Bei Betriebstemperatur der Brennstoffzelle und vorliegender oxidierender Betriebsatmosphäre besitzen diese Elemente die Eigenschaft sehr schnell durch die auf der Werkstoffoberfläche gebildete Chrom(III)oxidschicht zu diffundieren. Diese Elemente reichen sich somit in oxidischer Form an der Grenzfläche Chrom(III)oxidschicht/Gas weiter an. Bei Einsatz der erfindungsgemäßen Schutzschicht kann allerdings auf die Verwendung solcher Elemente verzichtet werden.

### Aufgabe und Lösung

Aufgabe der Erfindung ist es, ein kostengünstiges Herstellungsverfahren für eine Chromoxidverdampfungsschutzschicht für ein chromoxidbildendes Substrat sowie eine dadurch herstellbare Schutzschicht bereit zu stellen.

Die Aufgabe wird gelöst durch ein Herstellungsverfahren gemäß Hauptanspruch und eine Schutzschicht gemäß Nebenanspruch. Vorteilhafte Ausführungsformen des Verfahrens finden sich in den darauf rückbezogenen Ansprüchen.

### Gegenstand der Erfindung

Im Rahmen dieser Erfindung wurde gefunden, dass eine Spinellschicht umfassend Mangan, Kobalt und Kupfer, die durch ein besonderes Verfahren hergestellt wird, vorteilhaft eine derart gasdichte Schicht bildet, die, auf einem chromoxidbildenden Substrat angeordnet, selbst bei hohen Temperaturen bis 1000 °C ein Abdampfen von Chrom aus dem Substrat in der Regel nachhaltig verhindert.

Eine solche Schutzschicht wird vorteilhaft direkt durch Streichen, Sprühen oder Siebdruck als Mischung entsprechender Oxide auf ein chromoxidbildendes Substrat aufgebracht. Bei erhöhten Temperaturen bis 1000 °C, insbesondere bei Temperaturen zwischen 600 und 900°C (typische Betriebstemperaturen einer SOFC) bildet sich aus der aufgebrachten Schicht eine gasdichte Spinellschicht aus, die kein Chrom enthält oder aufnimmt.

Typische chromoxidbildende Substrate sind beispielsweise Interkonnektorwerkstoffe. Als Deckschicht ausbildendes Element bei den hohen Betriebstemperaturen einer SOFC (typischerweise 600 - 1000°C) enthält der Werkstoff signifikante Anteile an Chrom. Die genau Chromkonzentration hängt dabei vom jeweiligen Werkstofftyp ab. In Legierungen auf Chrombasis kann der Chromgehalt zwischen z. B. 60 und nahezu 100 Gew.-% variieren. In gebräuchlichen Hochtemperatur-Konstruktionswerkstoffen auf Fe-, Ni- oder FeNi-Basis beträgt der Chromgehalt üblicherweise 13 bis 30 Gew.-%. Für eine Interkonnektoranwendung wurden bisher insbesondere Legierungen auf Cr-Basis sowie FeCr-Basis in Betracht gezogen, da Werkstoffe auf der Basis NiCr und FeNiCr im Vergleich zu den keramischen SOFC-Materialien zu hohe thermische Ausdehnungskoeffizienten aufweisen.

Gegenstand der Erfindung ist, auf eine sehr einfache und kostengünstige Weise, eine Schutzschicht für ein Substrat auf Cr- oder FeCr-Basis, eventuell mit weiteren metallischen Legierungselementen, wie Mangan, Magnesium oder Vanadium in Konzentrationen unterhalb von 5 Gew.-%, zu schaffen. Wird das Substrat vor dem Einsatz in der SOFC mit einer oxidischen oder metallischen Schutzschicht versehen, die aus Kobalt, Mangan und Kupfer besteht, so bildet sich bei erhöhten Temperaturen eine Spinellschicht aus, die derart dicht und gasdicht ist, dass eine Freisetzung des Chroms und somit die Chromverdampfung aus dem Substrat in der Regel effektiv und nachhaltig verhindert wird. Dadurch kann eine Sublimation des Chroms zur Kathode und somit eine Vergiftung der Kathode bzw. der Grenzfläche Kathode/Elektrolyt durch Chrom effektiv verhindert werden. Dabei ist zu beachten, dass die Bildung dieser chromfreien Schutzschicht unter oxidierenden Bedingungen und bei Betriebstemperatur bereits nach wenigen Stunden erfolgt. Insbesondere chromfreie Spinelle sind bei Betriebstemperatur thermodynamisch stabil und besitzen eine ausreichend hohe elektrische Leitfähigkeit. Sie haften gut an der Chromoxidschicht. Die Haftungseigenschaften sind gut, da die thermischen Ausdehnungskoeffizienten beider Schichten miteinander vergleichbar sind.

Im Vergleich zu den anderen oben genannten Schutzmaßnahmen hat die neue Erfindung folgende, für die SOFC-Technik entscheidende Vorteile:
a) Die chromfreie Spinellschicht bildet sich durch Reaktion von Kobalt, Mangan und Kupfer aus der aufgebrachten Schicht und ist regelmäßig, kompakt, gasdicht und gut haftend.
b) Auftretende Mikrorisse während des Langzeitbetriebs, die beispielsweise durch Temperaturzyklierung induziert werden können, sind in der chromfreien Spinellschicht in der Regel ausheilfähig, da genügend Reservoir der reagierenden Elemente in der aufgebrachten Schicht vorhanden ist.
c) Die äußere Schicht kann mit einfachen Beschichtungsverfahren (Sprüh- oder Druckverfahren) aufgebracht werden und muss selbst nicht unbedingt eine hohe Dichte aufweisen.

### Spezieller Beschreibungsteil

Nachfolgend wird der Gegenstand der Erfindung anhand eines Ausführungsbeispiels näher erläutert, ohne dass der Gegenstand der Erfindung dadurch beschränkt wird.

Die Erfindung beruht auf einem kostengünstigen Verfahren zum Auftragen von Chromverdampfungsschutzschichten auf Interkonnektoren einer SOFC.

Ein Gemisch aus einem oder mehreren in einem definierten Verhältnis zueinander vorliegenden binären Oxiden (z. B. CoO, MnO₂ und CuO) wird in Form einer Suspension bzw. eines Schlickers durch Nasspulverspritzen, Aufpinseln oder Siebdrucken auf den Interkonnektor aufgebracht. Zudem können in diesem Verfahren die binären Oxide in Pulverform eingesetzt werden. Eine Vorbehandlung zum Ziele einer chemischen Reaktion zwischen den einzelnen Oxiden, wie sie beispielsweise bei der üblichen Herstellung von Spinellen und Perowskiten notwendig ist, ist nicht notwendig. Dies macht in Kombination mit den kostengünstigen o. g. Auftragungstechniken (Nasspulverspritzen, Aufpinseln, Siebdrucken) dieses Verfahren um ein Vielfaches preiswerter als die bisher verwendeten Methoden.

Wird der Interkonnektor vor dem Einsatz in der SOFC mit dieser oxidischen Suspension oder Schlicker, die aus den spinellbildenden Elementen CoO, MnO₂ und CuO besteht, versehen, so reagieren die o. g. Legierungselemente in der aufgebrachten Schutzschicht unter Bildung einer dichten, porenfreien und chromfreien Schicht. Eine Diffusion insbesondere des Mangans aus dem Stahl, wie gehabt von der Oberfläche des Interkonnektors durch die Chrom(III)oxidschicht hindurch zur Bildung einer dichten Schutzschicht ist bei diesen Mischoxiden nicht zwingend notwendig. Diese neu gebildete Schicht verhindert ihrerseits durch ihre Gasdichtigkeit eine weitere Freisetzung des Chroms und somit die Chromverdampfung. Dadurch kann eine Sublimation des Chroms zur Kathode und die daraus resultierende Vergiftung der Kathode bzw. der Grenzfläche Kathode/Elektrolyt durch das Chrom effektiv unterbunden werden.

Die Bildung dieser chromfreien Schutzschicht mit der Zusammensetzung Co_{3-x-y}CuₓMn_{y}O₄ mit 0 <x<1, 5 ; 0<y<3 und (x+y)<3 erfolgt bereits nach wenigen Stunden unter oxidierenden Bedingungen und bei Temperaturen oberhalb von 500 °C. Diese chromfreien Spinelle sind bei Betriebstemperatur der Brennstoffzelle thermodynamisch stabil und besitzen eine ausreichend hohe elektrische Leitfähigkeit. Sie haften gut an der darunter liegenden Chromoxidschicht, da die thermischen Ausdehnungskoeffizienten beider Schichten miteinander vergleichbar sind. Da sich die Spinelle während des SOFC-Betriebes aus den Einzeloxiden selbst bilden, ist eine aufwendige Aufbereitung der Ausgangsstoffe nicht erforderlich und Beschichtungen können aus dem Gemisch der einzelnen Oxide erfolgen.

## Patentansprüche

1. Verfahren zur Herstellung einer Schutzschicht auf einem chromoxidbildenden Substrat mit den Schritten
a) auf die Chromoxid-Oberfläche des chromoxidbildenden Substrats wird ein Gemenge umfassend CoO und MnO₂ und CuO aufgebracht,
b) bei Temperaturen von 500 °C bis 1000 °C bildet sich aus den aufgebrachten Oxiden direkt auf der Chromoxidschicht des Substrats eine gasdichte, chromfreie Spinellschicht aus.

2. Verfahren nach Anspruch 1, bei dem sich eine gasdichte, chromfreie Spinellschicht mit der Zusammensetzung
Co_{3-x-y}CuₓMn_{y}O₉ ausbildet, mit 0 < x < 1,5, 0 < y < 3 und (x + y) < 3.

3. Verfahren nach einem der vorhergehenden Ansprüche 1 bis 2, bei dem die aufgebrachten Oxide zusätzlich geringe Mengen an Nickel oder Eisen aufweisen.

4. Schutzschicht auf der Oberfläche eines chromoxidbildenden Substrats mit der Zusammensetzung Co_{3-x-y}CuₓMn_{y}O₄, mit 0 < x < 1,5, 0 < y < 3 und (x + y) < 3, wobei es sich um eine gasdichte, chromfreie Spinellschicht handelt, die direkt auf dem Substrat angeordnet ist.

5. Verwendung einer Schutzschicht nach vorherigem Anspruch 4 in einer Hochtemperatur-Brennstoffzelle.

## Claims

1. Method for producing a protective coating on a substrate forming chromium oxide with the steps
a) a mixture comprising CoO and MnO₂ and CuO is applied to the chromium oxide surface of the substrate forming chromium oxide,
b) at temperatures of 500° C to 1000° C a gasproof, chrome free spinel coating is formed directly on the chromium oxide coating of the substrate from the oxides applied.

2. Method according to claim 1, in which a gasproof chrome free spinel coating is formed with the composition Co_{3-x-y}CuₓMn_{y}O₄, with 0 < x < 1.5,0<y<3 and (x+y)<3.

3. Method according to one of the previous claims 1 to 2, in which the oxides applied also have small quantities of nickel or iron.

4. Protective coating on the surface of a substrate forming chromium oxide with the composition Co_{3-x-y}CuₓMn_{y}O₄, with 0 < x < 1.5, 0 < y < 3 and (x + y) < 3, in which this is a gasproof, chromium free spinel coating, which is arranged directly on the substrate.

5. Use of a protective coating according to the previous claim 4 in a high temperature fuel cell.

## Revendications

1. Procédé de réalisation d'une couche protectrice sur un substrat formant de l'oxyde de chrome, comportant les étapes :
a) un mélange contenant du CoO et MnO₂ et CuO est déposé sur la surface d'oxyde de chrome du substrat formant de l'oxyde de chrome,
b) une couche de spinelle exempte de chrome, étanche au gaz se forme, à des températures de 500°C à 1 000°C, à partir des oxydes déposés directement sur la couche d'oxyde de chrome du substrat.

2. Procédé selon la revendication 1, dans lequel il se forme une couche de spinelle exempte de chrome, étanche au gaz, avec la composition Co_{3-x-y}CuₓMn_{y}O₄, avec 0 < x < 1,5, 0 < y < 3 et (x + y) < 3.

3. Procédé selon l'une des revendications précédentes 1 à 2, dans lequel les oxydes déposés contiennent, en plus, de faibles quantités de nickel ou de fer.

4. Couche protectrice sur la surface d'un substrat formant de l'oxyde de chrome, ayant la composition Co_{3-x-y}CuₓMn_{y}O₄, avec 0 < x < 1, 5, 0 < y < 3 et (x + y) < 3, sachant qu'il s'agit d'une couche de spinelle exempte de chrome, étanche au gaz, déposée directement sur le substrat.

5. Utilisation d'une couche protectrice selon la revendication 4 précédente dans une cellule de combustible à température élevée.
